(19) 

Europäisches Patentamt
European Patent Office
Office européen des brevets

(11) **EP 4 668 458 A1**

(12) **EUROPEAN PATENT APPLICATION**
published in accordance with Art. 153(4) EPC

(43) Date of publication:
**24.12.2025  Bulletin 2025/52**

(21) Application number: **23939393.7**

(22) Date of filing: **21.12.2023**

(51) International Patent Classification (IPC):
**H01M 50/457** (2021.01)     **H01M 50/409** (2021.01)

(52) Cooperative Patent Classification (CPC):
Y02E 60/10

(86) International application number:
**PCT/CN2023/140738**

(87) International publication number:
**WO 2024/244425 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **26.05.2023   CN 202310609508**

(71) Applicant: **Contemporary Amperex Technology
Co., Limited**
**Ningde, Fujian 352100 (CN)**

(72) Inventors:
• **WANG, Zhaoguang**
  **Ningde, Fujian 352100 (CN)**

• **HAN, Chongwang**
  **Ningde, Fujian 352100 (CN)**
• **YANG, Jianrui**
  **Ningde, Fujian 352100 (CN)**
• **SUN, Chengdong**
  **Ningde, Fujian 352100 (CN)**
• **HUANG, Siying**
  **Ningde, Fujian 352100 (CN)**
• **OUYANG, Chuying**
  **Ningde, Fujian 352100 (CN)**

(74) Representative: **Gong, Jinping**
**CocreateIP**
**Neumarkter Straße 21**
**81673 München (DE)**

(54) **SEPARATOR, PREPARATION METHOD FOR SEPARATOR, AND ELECTROCHEMICAL DEVICE**

(57)     Disclosed in the present application are a separator, a preparation method for a separator, and an electrochemical device. The separator comprises a bonding layer, and a base film and a gel film which are respectively arranged on two sides of the bonding layer. In the present application, the gel film has relatively good ductility and deformation resistance, is not prone to be being pierced or still completely covers a pierced position after being pierced, such that the separator still plays a role in separating positive and negative electrodes; and the base film has relatively good shape-retaining capability and self-supporting performance. The base film and the gel film are respectively provided on the two sides of the bonding layer, such that the gel film and the base film are bonded into a whole under the bonding action of the bonding layer, and thus when there is an external force acting in the vertical direction of the separator, the separator deforms but is not prone to breaking, thereby delaying the breakage of the separator and improving the stability and safety of a battery.

EP 4 668 458 A1

## Description

### CROSS-REFERENCE TO RELATED APPLICATIONS

The present application claims the priority of the Chinese patent application No. 202310609508.0 filed to the China Patent Office on May 26, 2023, and entitled "Separator, Preparation Method for Separator, and Electrochemical Device", of which the entire contents are incorporated herein by reference.

### TECHNICAL FIELD

The present application relates to the technical field of batteries, and in particular, to a separator, a preparation method for the separator, and an electrochemical device.

### BACKGROUND

A separator of a lithium battery is mostly made of a polyolefin separator, which has a low degree of physical deformation in a direction perpendicular to a film surface and is prone to breaking under a certain external force in a vertical direction. However, accumulation of lithium dendrites during the use of the battery will cause a series of physical damage to the separator in the vertical direction of the separator, causing short circuit between an anode and a cathode and short circuit of the battery.

### SUMMARY OF THE INVENTION

The present application is made in view of the above issues, and has an objective to provide a separator to improve piercing resistance of the separator, reduce physical damage of the separator, and improve stability of a battery.
In order to achieve the above objective, the examples of the present application provide a separator, a preparation method for the separator, and en electrochemical device.
In a first aspect, an example of the present application provides a separator, including a bonding layer, and a base film and a gel film which are respectively arranged on two sides of the bonding layer.
Thus, in the technical solution of the example of the present application, the gel film has relatively good ductility and deformation resistance, is not prone to be being pierced or still completely covers a pierced position after being pierced, such that the separator still plays a role in separating positive and negative electrodes; and the base film has relatively good shape-retaining capability and self-supporting performance. The base film and the gel film are respectively arranged on the two sides of the bonding layer, such that the gel film and the base film are bonded into a whole under a bonding action of the bonding layer, and thus when there is an external force acting in a vertical direction of the separator, the separator deforms but is not prone to breaking, thereby delaying breakage of the separator and improving stability and safety of a battery.
In any embodiment, a thickness of the bonding layer is $\delta_1$, wherein $0.5\ \mu m \leq \delta_1 \leq 6\ \mu m$, optionally, $0.5\ \mu m \leq \delta_1 \leq 3\ \mu m$, and the thickness of the bonding layer affects energy density of a battery cell and thus affects a service life of the battery cell, and further affects heat resistance of the separator; when the thickness of the bonding layer is less than 0.5 $\mu m$, the heat resistance of the separator is reduced; and when the thickness of the bonding layer is greater than 6 $\mu m$, the energy density of the battery cell is reduced, and the service life of the battery cell is affected; and/or,

a thickness of the base film is $\delta_2$, wherein $3\ \mu m \leq \delta_2 \leq 12\ \mu m$, optionally, $3\ \mu m \leq \delta_2 \leq 8\ \mu m$, and the thickness of the base film affects the energy density of the battery cell and shape-retaining performance of the separator; when the thickness of the base film is less than 3 $\mu m$, the base film is too thin, the thickness of the separator is too thin, and a shape-retaining capability of the separator is reduced; and when the thickness of the base film is greater than 12 $\mu m$, the base film is too thick, the energy density of the battery cell is reduced, and thus the service life of the battery cell is reduced; and/or,

a thickness of the gel film is $\delta_3$, wherein $1\ \mu m \leq \delta_3 \leq 12\ \mu m$, optionally, $1\ \mu m \leq \delta_3 \leq 8\ \mu m$, and the thickness of the gel film affects the energy density of the battery cell and piercing resistance of the separator; when the thickness of the gel film is less than 1 $\mu m$, the gel film is too thin, the thickness of the separator is too thin, and the piercing resistance of the separator is reduced; and when the thickness of the gel film is greater than 12 $\mu m$, the gel film is too thick, the energy density of the battery cell is reduced, and thus the service life of the battery cell is reduced.

In any embodiment, a material of the base film includes but not limited to at least one of polyolefin, polyether, polyether ketone, polyimide, polytetrafluoroethylene, polyvinyl fluoride, polyvinylidene fluoride, polyvinylidene chloride, a polyethylene-propylene copolymer and a copolymer containing a C-F bond, by using the base film made of the above material, the good shape-retaining capability may be provided; and/or,

a material of the gel film includes but not limited to at least one of polyurethane and polyimide, by using the gel film made of the above material, good deformation capability may be provided.

In any embodiment, the bonding layer includes inorganic particles and a binder. The inorganic particles and the binder may provide the good shape-retaining capability and bonding capability.

In any embodiment, the inorganic particles include but not limited to any one of boehmite, aluminum oxide, barium sulfate, magnesium oxide, magnesium hydroxide, silicon dioxide, tin dioxide, titanium oxide, calcium oxide, zinc oxide, zirconium oxide, yttrium oxide, nickel oxide, cerium oxide, zirconium titanate, barium titanate and magnesium fluoride, and by using the above inorganic particles, a barrier effect and the shape-retaining capability may be enhanced; and/or, the binder includes but not limited to at least one of acrylate, acrylic acid and carboxymethyl cellulose, and by using the above binder, bonding performance may be improved.

In any embodiment, a mass proportion of the inorganic particles in the bonding layer is in a range from 30% to 50%; optionally, the mass proportion of the inorganic particles in the bonding layer is in a range from 35% to 45%. The mass proportion of the inorganic particles in the bonding layer affects ion transmission capability and the heat resistance of the separator. When the mass proportion of the inorganic particles in the bonding layer is less than 30%, the bonding layer is too thin, and the heat resistance is reduced, thereby affecting cycle performance of the battery cell. When the mass proportion of the inorganic particles in the bonding layer is greater than 50%, the ion transmission capability is reduced, thereby affecting the cycle performance of the battery cell.

In any embodiment, a mass proportion of the binder in the bonding layer is in a range from 10% to 20%; optionally, the mass proportion of the binder in the bonding layer is in a range from 13% to 18%. The mass proportion of the binder in the bonding layer affects the bonding performance. When the mass proportion of the binder in the bonding layer is less than 10%, a bonding force is insufficient. When the mass proportion of the binder in the bonding layer is greater than 20%, the bonding force is too large and the coating is uneven.

In any embodiment, an average particle size of the inorganic particles is in a range from 0.1 nm to 10 nm; optionally, the average particle size of the inorganic particles is in a range from 0.2 nm to 0.8 nm. The average particle size of the inorganic particles affects coating performance. When the average particle size of the inorganic particles is less than 0.1 nm, it is prone to blocking a pore channel and reducing the ion transmission capability. When the average particle size of the inorganic particles is greater than 10 nm, it is prone to dispersing unevenly and affecting the heat resistance.

In any embodiment, a specific surface area of the inorganic particles is in a range from 5 $g/m^2$ to 15 $g/m^2$; optionally, the specific surface area of the inorganic particles is in a range from 6 $g/m^2$ to 9 $g/m^2$. The specific surface area of the inorganic particles affects a surface tension. When the specific surface area of the inorganic particles is less than 5 $g/m^2$, the surface tension is insufficient and the bonding is not strong. When the specific surface area of the inorganic particles is greater than 15 $g/m^2$, the surface tension is too large, and it is difficult to coat evenly during coating.

In any embodiment, air permeability of the separator is in a range from 300 s/100cc to 500 s/100cc; optionally, the air permeability of the separator is in a range from 400 s/100cc to 450 s/100cc. The air permeability of the separator affects a porosity of the separator, and further affects the ion transmission capability and the piercing resistance of the separator. When the air permeability of the separator is less than 300s/100cc, the ion transmission capability is reduced. When the air permeability of the separator is greater than 500s/100cc, the piercing resistance of the separator is reduced.

In any embodiment, porosity of the separator is in a range from 25% to 65%, and optionally, the porosity of the separator is in a range from 40% to 50%. Maintaining a certain porosity of the separator can improve deformation resistance and the piercing resistance of the separator, and improve the ion transmission capability at the same time. When the porosity of the separator is less than 25%, the ion transmission capability is reduced. When the porosity of the separator is greater than 65%, the piercing resistance of the separator is reduced.

In any embodiment, porosity of the base film is in a range from 30% to 70%, and optionally, the porosity of the base film is in a range from 50 to 60 %; maintaining a certain porosity of the base film can improve the ion transmission capability and the piercing resistance of the separator, and improve the ion transmission capability at the same time; when the porosity of the base film is less than 30%, the ion transmission capability is reduced; and when the porosity of the base film is greater than 70%, the piercing resistance of the separator is reduced; and/or

porosity of the gel film is in a range from 40% to 80%, and optionally, the porosity of the gel film is in a range from 50% to 60 %; maintaining a certain porosity of the gel film can improve the ion transmission capability and the piercing resistance of the separator, and improve the ion transmission capability at the same time; when the porosity of the gel film is less than 40%, the ion transmission capability is reduced; and when the porosity of the gel film is greater than 80%, the piercing resistance of the separator is reduced.

In any embodiment, pores of the base film have a pore size ranging from 100 nm to 800 nm; optionally, the pores of the base film have the pore size ranging from 200 nm to 600 nm; the pore size of the pores of the base film affects the piercing resistance and ion transmission capability of the separator, and can improve the ion transmission capability at the same time; when the pores of the base film have the pore size less than 100 nm, the ion transmission capability is reduced; and when the pores of the base film have the pore size greater than 800 nm, the piercing resistance of the separator decreases; and/or,

pores of the gel film have a pore size ranging from 200 nm to 1000 nm; optionally, the pores of the gel film have the pore size ranging from 200 nm to 600 nm; the pore size of the pores of the gel film affects the ion transmission capability and piercing resistance of the separator; when the pores of the gel film have the pore size less than 200 nm, the ion transmission capability is reduced; and when the pores of the gel film have the pore size greater than 1000 nm, the piercing resistance of the separator decreases.

In any embodiment, surface density of the base film is in a range from 2 $g/m^2$ to 10 $g/m^2$; optionally, the surface density of the base film is in a range from 3 $g/m^2$ to 8 $g/m^2$; the surface density of the base film affects the shape-retaining capability and the ion transmission capability of the separator; when the surface density of the base film is less than 2 $g/m^2$, the shape-retaining capability of the separator decreases; and when the surface density of the base film is greater than 10 $g/m^2$, the ion transmission capability is reduced; and/or,

surface density of the gel film is in a range from 2 $g/m^2$ to 10 $g/m^2$; optionally, the surface density of the base film is in a range from 4 $g/m^2$ to 8 $g/m^2$; the surface density of the gel film affects the piercing resistance and the ion transmission capability of the separator; when the surface density of the gel film is less than 2 $g/m^2$, the piercing resistance of the separator decreases; and when the surface density of the gel film is greater than 10 $g/m^2$, the ion transmission capability is reduced, and then the cycle performance of the battery cell is affected; and/or,
a specific surface area of the bonding layer is in a range from 1.0 $g/m^2$ to 6.0 $g/m^2$; optionally, the specific surface area of the bonding layer is in a range from 2.0 $g/m^2$ to 4.0 $g/m^2$, and the specific surface area of the bonding layer affects the surface tension; when the specific surface area of the bonding layer is less than 2 $g/m^2$, the surface tension is insufficient and the bonding is not strong; and when the specific surface area of the bonding layer is greater than 10 $g/m^2$, the surface tension is too large, and it is difficult to coat evenly during coating.

In any embodiment, a heat shrinkage rate of the separator is less than 2%, and optionally, the heat shrinkage rate of the separator is less than 1%. By limiting the heat shrinkage rate of the separator, the shape-retaining capability of the separator is improved, and the short circuit of positive and negative electrodes and the short circuit of the battery caused by heat shrinkage of the separator are reduced.

In any embodiment, a tensile deformation rate of the separator is greater than 400%, and optionally, the tensile deformation rate of the separator is greater than 600%. By limiting the tensile deformation rate of the separator, deformation resistance of the separator is enhanced, a probability of damage of the separator is decreased, and the damage time of the separator is delayed.

In any embodiment, the piercing resistance of the separator is greater than or equal to 350 gf, and optionally, the piercing resistance of the separator is greater than or equal to 500 gf. By limiting the piercing resistance of the separator, the breaking time of the separator is delayed, thereby improving the safety and stability of the battery.

In any embodiment, a transverse tensile strength of the separator is greater than 1000 $kg/cm^2$; transverse tensile performance of the separator affects the deformation resistance of the separator; and when the transverse tensile strength of the separator is greater than 1000 $kg/cm^2$, good deformation capability may be provided; and/or,
a longitudinal tensile strength of the separator is greater than 1200 $kg/cm^2$; the transverse tensile strength of the separator affects the deformation resistance of the separator; and when the longitudinal tensile strength of the separator is greater than 1200 $kg/cm^2$, good deformation capability may be provided.

In a second aspect, an embodiment of the present application provides a preparation method for a separator, which is used to prepare the separator of the first aspect of the present application, and includes the following steps:

providing a base film; and
arranging a bonding layer on one side of the base film and arranging a gel film on the side of the bonding layer facing away from the base film to obtain the separator.

By arranging the bonding layer on one side of the base film and arranging the gel film on the side of the bonding layer facing away from the base film, a stable shape of the base film provides support for the bonding layer, and the bonding film bonds the base film and the gel film into a whole to obtain the separator.

In any embodiment, the step of providing the base film includes:
preparing the base film by melt extrusion and hot stretching. The base film prepared by melt extrusion and hot stretching has good shape-retaining capability.

In any embodiment, the step of arranging the bonding layer on one side of the base film and arranging the gel film on the side of the bonding layer facing away from the base film to obtain the separator includes:

preparing a bonding layer slurry and coating the bonding layer slurry on one side of the base film to obtain a bonding-layer-containing base film; and

arranging the gel film on one side of the bonding layer of the bonding-layer-containing base film facing away from the base film, and performing drying and pressing to obtain the separator.

The bonding layer slurry includes inorganic particles, a binder and a solvent. By configuring the bonding layer slurry and coating the bonding layer slurry on one side of the base film to obtain the bonding-layer-containing base film, the bonding layer slurry can be evenly dispersed on the base film to provide uniform bonding capability. By containing the inorganic particles, the binder and the solvent, the inorganic particles and the binder are dispersed in the solvent, which is convenient for coating. In some examples of the present disclosure, the solvent includes water. And/or,

a drying temperature is in a range from 30°C to 40°C; optionally, the drying temperature is in a range from 33°C to 37°C; the drying temperature affects the bonding performance of the base film and the gel film to the bonding layer; when the drying temperature is less than/greater than 30°C, the bonding is not strong; and when the drying temperature is less than 40°C, the bonding temperature is too high, and the bonding is uneven; and/or,
a drying time is in a range from 1 s to 10 s; optionally, the drying time is in a range from 3 s to 7 s; the drying time affects the bonding performance of the base film and the gel film to the bonding layer; when the drying time is less than 1 s, the bonding is not tight enough; and when the drying time is greater than 10 s; and/or,
a pressing pressure is in a range from 5 N to 20 N; optionally, the pressing pressure is in a range from 8 N to 15 N; the pressing pressure affects the bonding performance of the base film and the gel film to the bonding layer; when the pressing pressure is less than 5 N, the bonding of the base film and the gel film to the bonding layer is not tight enough; and when the pressing pressure is greater than 20 N, the separator is compressed, thereby increasing the probability of the inorganic particles damaging the separator.

In a third aspect, an embodiment of the present application provides an electrochemical device, including the separator in the first aspect of the present application.
In any embodiment, the electrochemical device includes a capacitor, a primary battery or a secondary battery.

## DETAILED DESCRIPTION

Hereinafter, embodiments of a separator, a preparation method for the separator, a solar power generation device, and an electrical device of the present application are specifically disclosed. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.
"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.
Unless otherwise specified, all embodiments and optional embodiments of the present application may be combined with each other to form new technical solutions.
Unless otherwise specified, all technical features and optional technical features of the present application may be combined with each other to form new technical solutions.
Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further comprise step (c), meaning that step (c) may be added to the method in any order. For example, the method may comprise steps (a), (b) and (c), or may further comprise steps (a), (c) and (b), or may further comprise steps (c), (a) and (b), and the like.
Unless otherwise specifically stated, the terms "comprising" and "including" mentioned in the present application may be open-ended, or may be closed-ended. For example, the "comprising" and "including" may indicate that it is also possible to comprise or comprise other components not listed, and it is also possible to comprise or comprise only the listed components.

Unless otherwise specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

A separator is usually arranged between a positive electrode and a negative electrode of a battery to reduce short circuit between the positive electrode and the negative electrode and decreases a probability of short circuit of the battery. Therefore, the separator needs to have a certain shape-retaining capability. Usually, the separator with the shape-retaining capability has a problem of poor piercing resistance in a direction perpendicular to the separator. During the use of the battery, the accumulation of lithium dendrites will compress the separator in the vertical direction and pierce the separator, thereby increasing the risk of short circuit between the positive and negative electrodes.

Therefore, there are endless studies on the short circuit of the positive and negative electrodes caused by the damage of the separator. For example, a microporous polyolefin lithium battery separator plate comprises: a laminated, dry-prepared, microporous multilayer diaphragm, comprises at least two outer layers and at least one inner layer, each of the outer layers comprises polyethylene, a polyethylene blend, a polyethylene copolymer or a mixture thereof, and the inner layer comprises polypropylene, a polypropylene blend, a polypropylene copolymer or a mixture thereof. PP/PE is hot-pressed and compounded into a variety of structures, which can slightly improve the heat resistance and strength of the diaphragm, but the thickness is increased too much, and air permeability of the diaphragm after hot-pressing is seriously reduced. A pore structure is blocked, which affects the energy density of the battery and is not conducive to the transfer of Li+ in the battery.

Unexpectedly, by arranging the separator to include a bonding layer, and a base film and a gel film which are arranged on two sides of the bonding layer, stability of the separator is maintained while improving ion transmission, and piercing resistance of the separator is improved.

Based on this, the present application provides a separator, a preparation method for the separator, a positive electrode sheet, a method for preparing the positive electrode sheet, and an electrochemical device.

In a first aspect, an example of the present application provides a separator, including a bonding layer, and a base film and a gel film which are respectively arranged on two sides of the bonding layer.

Thus, in the technical solution of the example of the present application, the gel film has relatively good ductility and deformation resistance, is not prone to be being pierced or still completely covers a pierced position after being pierced, such that the separator still plays a role in separating positive and negative electrodes; and the base film has relatively good shape-retaining capability and self-supporting performance. The base film and the gel film are respectively arranged on the two sides of the bonding layer, such that the gel film and the base film are bonded into a whole under a bonding action of the bonding layer, and thus when there is an external force acting in a vertical direction of the separator, the separator deforms but is not prone to breaking, thereby delaying breakage of the separator and improving stability and safety of a battery.

In any embodiment, a heat shrinkage rate of the separator is less than 2%, and optionally, the heat shrinkage rate of the separator is less than 1%. By limiting the heat shrinkage rate of the separator, the shape-retaining capability of the separator is improved, and the short circuit of positive and negative electrodes and the short circuit of the battery caused by heat shrinkage of the separator are reduced.

In any embodiment, a tensile deformation rate of the separator is greater than 400%, and optionally, the tensile deformation rate of the separator is greater than 600%. By limiting the tensile deformation rate of the separator, deformation resistance of the separator is enhanced, a probability of damage of the separator is decreased, and the damage time of the separator is delayed.

In any embodiment, the piercing resistance of the separator is greater than or equal to 350 gf, and optionally, the piercing resistance of the separator is greater than or equal to 500 gf. By limiting the piercing resistance of the separator, the breaking time of the separator is delayed, thereby improving the safety and stability of the battery.

In any embodiment, a transverse tensile strength of the separator is greater than 1000 kg/cm$^2$; transverse tensile performance of the separator affects the deformation resistance of the separator; and when the transverse tensile strength of the separator is greater than 1000 kg/cm$^2$, good deformation capability may be provided; and/or,

a longitudinal tensile strength of the separator is greater than 1200 kg/cm$^2$; the transverse tensile strength of the separator affects the deformation resistance of the separator; and when the longitudinal tensile strength of the separator is greater than 1200 kg/cm$^2$, good deformation capability may be provided.

In any embodiment, a thickness of the bonding layer is $\delta_1$, wherein 0.5 $\mu$m$\leq\delta_1\leq$6 $\mu$m, and the thickness $\delta_1$ of the bonding layer may be 0.5 $\mu$m, 1 $\mu$m, 1.5 $\mu$m, 2 $\mu$m, 2.5 $\mu$m, 3 $\mu$m, 3.5 $\mu$m, 4 $\mu$m, 4.5 $\mu$m, 5 $\mu$m, or 5.5 $\mu$m. Optionally, 0.5 $\mu$m$\leq\delta_1\leq$3 $\mu$m, and the thickness of the bonding layer affects energy density of a battery cell and thus affects a service life of the battery cell, and further affects heat resistance of the separator; when the thickness of the bonding layer is less than 0.5

μm, the heat resistance of the separator is reduced; and when the thickness of the bonding layer is greater than 6 μm, the energy density of the battery cell is reduced, and the service life of the battery cell is affected; and/or,

a thickness of the base film is $\delta_2$, wherein 3 μm≤$\delta_2$≤12 μm, and the thickness $\delta_2$ of the base film may be 3 μm, 3.5 μm, 4 μm, 4.5 μm, 5 μm, 5.5 μm, 6 μm, 6.5 μm, 7 μm, 7.5 μm, 8 μm, 8.5 μm, 9 μm, 9.5 μm, 10 μm, 10.5 μm, 11 μm, 11.5 μm, or 12 μm. Optionally, 3 μm≤$\delta_2$≤8 μm, and the thickness of the base film affects the energy density of the battery cell and shape-retaining performance of the separator; when the thickness of the base film is less than 3 μm, the base film is too thin, the thickness of the separator is too thin, and a shape-retaining capability of the separator is reduced; and when the thickness of the base film is greater than 12 μm, the base film is too thick, the energy density of the battery cell is reduced, and thus the service life of the battery cell is reduced; and/or,

A thickness of the gel film is $\delta_3$, wherein 1 μm≤$\delta_3$≤12 μm, and the thickness $\delta_3$ of the gel film may be 1 μm, 1.5 μm, 2 μm, 2.5 μm, 3 μm, 3.5 μm, 4 μm, 4.5 μm, 5 μm, 5.5 μm, 6 μm, 6.5 μm, 7 μm, 7.5 μm, 8 μm, 8.5 μm, 9 μm, 9.5 μm, 10 μm, 10.5 μm, 11 μm, 11.5 μm, or 12 μm. optionally, 1 μm≤$\delta_3$≤8 μm, and the thickness of the gel film affects the energy density of the battery cell and piercing resistance of the separator; when the thickness of the gel film is less than 1 μm, the gel film is too thin, the thickness of the separator is too thin, and the piercing resistance of the separator is reduced; and when the thickness of the gel film is greater than 12 μm, the gel film is too thick, the energy density of the battery cell is reduced, and thus the service life of the battery cell is reduced.

In any embodiment, a material of the base film includes but not limited to at least one of polyolefin, polyether, polyether ketone, polyimide, polytetrafluoroethylene, polyvinyl fluoride, polyvinylidene fluoride, polyvinylidene chloride, a polyethylene-propylene copolymer and a copolymer containing a C-F bond, by using the base film made of the above material, the good shape-retaining capability may be provided; and/or,

a material of the gel film includes but not limited to at least one of polyurethane and polyimide, by using the gel film made of the above material, good deformation capability may be provided.

In any embodiment, the bonding layer includes inorganic particles and a binder. The inorganic particles and the binder may provide the good shape-retaining capability and bonding capability.

In any embodiment, the inorganic particles include but not limited to any one of boehmite, aluminum oxide, barium sulfate, magnesium oxide, magnesium hydroxide, silicon dioxide, tin dioxide, titanium oxide, calcium oxide, zinc oxide, zirconium oxide, yttrium oxide, nickel oxide, cerium oxide, zirconium titanate, barium titanate and magnesium fluoride, and by using the above inorganic particles, a barrier effect and the shape-retaining capability may be enhanced; and/or,

the binder includes but not limited to at least one of acrylate, acrylic acid and carboxymethyl cellulose, and by using the above binder, bonding performance may be improved.

In any embodiment, a mass proportion of the inorganic particles in the bonding layer is in a range from 30% to 50%, and the mass proportion of the inorganic particles in the bonding layer may be 30%, 33%, 35%, 38%, 40%, 42%, 45%, 47%, or 50%; optionally, the mass proportion of the inorganic particles in the bonding layer is in a range from 35% to 45%. The mass proportion of the inorganic particles in the bonding layer affects ion transmission capability and the heat resistance of the separator. When the mass proportion of the inorganic particles in the bonding layer is less than 30%, the bonding layer is too thin, and the heat resistance is reduced, thereby affecting cycle performance of the battery cell. When the mass proportion of the inorganic particles in the bonding layer is greater than 50%, the ion transmission capability is reduced, thereby affecting the cycle performance of the battery cell.

In any embodiment, a mass proportion of the binder in the bonding layer is in a range from 10% to 20%, and the mass proportion of the binder in the bonding layer may be 10%, 11%, 12%, 13%, 14%, 15%, 16%, 17%, 18%, 19%, or 20%; optionally, the mass proportion of the binder in the bonding layer is in a range from 13% to 18%. The mass proportion of the binder in the bonding layer affects the bonding performance. When the mass proportion of the binder in the bonding layer is less than 10%, a bonding force is insufficient. When the mass proportion of the binder in the bonding layer is greater than 20%, the bonding force is too large and the coating is uneven.

In any embodiment, an average particle size of the inorganic particles is in a range from 0.1 nm to 10 nm, and the average particle size of the inorganic particles may be 0.1 nm, 0.2 nm, 0.3 nm, 0.4 nm, 0.5 nm, 0.6 nm, 0.7 nm, 0.8 nm, 0.9 nm, 1.0 nm, 2.0 nm, 3.0 nm, 4.0 nm, 5.0 nm, 6.0 nm, 7.0 nm, 8.0 nm, 9.0 nm, or 10.0 nm; optionally, the average particle size of the inorganic particles is in a range from 0.2 nm to 0.8 nm. The average particle size of the inorganic particles affects coating performance. When the average particle size of the inorganic particles is less than 0.1 nm, it is prone to blocking a pore channel and reducing the ion transmission capability. When the average particle size of the inorganic particles is greater than 10 nm, it is prone to dispersing unevenly and affecting the heat resistance.

In any embodiment, a specific surface area of the inorganic particles is in a range from 5 g/m$^2$ to 15 g/m$^2$, and the specific surface area of the inorganic particles may be 5 g/m$^2$, 6 g/m$^2$, 7 g/m$^2$, 8 g/m$^2$, 9 g/m$^2$, 10 g/m$^2$, 11 g/m$^2$, 12 g/m$^2$, 13 g/m$^2$, 14 g/m$^2$, or 15 g/m$^2$; optionally, the specific surface area of the inorganic particles is in a range from 6 g/m$^2$ to 9 g/m$^2$. The specific surface area of the inorganic particles affects a surface tension. When the specific surface area of the inorganic particles is less than 5 g/m$^2$, the surface tension is insufficient and the bonding is not strong. When the specific surface area of the inorganic particles is greater than 15 g/m$^2$, the surface tension is too large, and it is difficult to coat evenly during coating.

In any embodiment, air permeability of the separator is in a range from 300 s/100cc to 500 s/100cc, and the air permeability of the separator may be 300 s/100cc, 320 s/100cc, 350 s/100cc, 380 s/100cc, 400 s/100cc, 420 s/100cc, 450 s/100cc, 470 s/100cc, or 500 s/100cc; optionally, the air permeability of the separator is in a range from 400 s/100cc to 450 s/100cc. The air permeability of the separator affects a porosity of the separator, and further affects the ion transmission capability and the piercing resistance of the separator. When the air permeability of the separator is less than 300 s/100cc, the ion transmission capability is reduced. When the air permeability of the separator is greater than 500s/100cc, the piercing resistance of the separator is reduced.

In any embodiment, porosity of the separator is in a range from 25% to 65%, and the porosity of the separator of the separator may be 25%, 30%, 35%, 40%, 45%, 50%, 55%, 60%, or 65%; optionally, the porosity of the separator is in a range from 40% to 50%. Maintaining a certain porosity of the separator can improve deformation resistance and the piercing resistance of the separator, and improve the ion transmission capability at the same time. When the porosity of the separator is less than 25%, the ion transmission capability is reduced. When the porosity of the separator is greater than 65%, the piercing resistance of the separator is reduced.

In any embodiment, porosity of the base film is in a range from 30% to 70%, and the porosity of the base film may be 30%, 35%, 40%, 45%, 50%, 55%, 60%, 65%, or 70%. Optionally, the porosity of the base film is in a range from 50 to 60 %; maintaining a certain porosity of the base film can improve the ion transmission capability and the piercing resistance of the separator, and improve the ion transmission capability at the same time; when the porosity of the base film is less than 30%, the ion transmission capability is reduced; and when the porosity of the base film is greater than 70%, the piercing resistance of the separator is reduced; and/or

Porosity of the gel film is in a range from 40% to 80%, and the porosity of the gel film may be 40%, 45%, 50%, 55%, 60%, 65%, 70%, 7540%, 45%, 50%, 55%, 60%, 65%, 70%, 75%, or 80%. Optionally, the porosity of the gel film is in a range from 50% to 60 %; maintaining a certain porosity of the gel film can improve the ion transmission capability and the piercing resistance of the separator, and improve the ion transmission capability at the same time; when the porosity of the gel film is less than 40%, the ion transmission capability is reduced; and when the porosity of the gel film is greater than 80%, the piercing resistance of the separator is reduced.

In any embodiment, pores of the base film have a pore size ranging from 100 nm to 800 nm, and the pores of the base film may have the pore size of 100 nm, 150 nm, 200 nm, 250 nm, 300 nm, 350 nm, 400 nm, 450 nm, 500 nm, 550 nm, 600 nm, 650 nm, 700 nm, 750 nm, or 800 nm; optionally, the pores of the base film have the pore size ranging from 200 nm to 600 nm; the pore size of the pores of the base film affects the piercing resistance and ion transmission capability of the separator, and can improve the ion transmission capability at the same time; when the pores of the base film have the pore size less than 100 nm, the ion transmission capability is reduced; and when the pores of the base film have the pore size greater than 800 nm, the piercing resistance of the separator decreases; and/or,

pores of the gel film have a pore size ranging from 200 nm to 1000 nm, and the pores of the gel film may have the pore size of 200 nm, 250 nm, 300 nm, 350 nm, 400 nm, 450 nm, 500 nm, 550 nm, 600 nm, 650 nm, 700 nm, 750 nm, 800 nm, 850 nm, 900 nm, 950 nm, or 1000 nm; optionally, the pores of the gel film have the pore size ranging from 200 nm to 600 nm; the pore size of the pores of the gel film affects the ion transmission capability and piercing resistance of the separator; when the pores of the gel film have the pore size less than 200 nm, the ion transmission capability is reduced; and when the pores of the gel film have the pore size greater than 1000 nm, the piercing resistance of the separator decreases.

in any embodiment, surface density of the base film is in a range from 2 g/m$^2$ to 10 g/m$^2$, and the surface density of the base film may be 2 g/m$^2$, 3 g/m$^2$, 4 g/m$^2$, 5 g/m$^2$, 6 g/m$^2$, 7 g/m$^2$, 8 g/m$^2$, 9 g/m$^2$, or 10 g/m$^2$; optionally, the surface density of the base film is in a range from 3 g/m$^2$ to 8 g/m$^2$; the surface density of the base film affects the shape-retaining capability and the ion transmission capability of the separator; when the surface density of the base film is less than 2 g/m$^2$, the shape-retaining capability of the separator decreases; and when the surface density of the base film is greater than 10 g/m$^2$, the ion transmission capability is reduced; and/or,

surface density of the gel film is in a range from 2 g/m$^2$ to 10 g/m$^2$, and the surface density of the gel film may be 2 g/m$^2$, 3 g/m$^2$, 4 g/m$^2$, 5 g/m$^2$, 6 g/m$^2$, 7 g/m$^2$, 8 g/m$^2$, 9 g/m$^2$, or 10 g/m$^2$; optionally, the surface density of the base film is in a range from 4 g/m$^2$ to 8 g/m$^2$; the surface density of the gel film affects the piercing resistance and the ion transmission capability of the separator; when the surface density of the gel film is less than 2 g/m$^2$, the piercing resistance of the separator decreases; and when the surface density of the gel film is greater than 10 g/m$^2$, the ion transmission capability is reduced, and then the cycle performance of the battery cell is affected; and/or,

a specific surface area of the bonding layer is in a range from 1.0 g/m$^2$ to 6.0 g/m$^2$, and the specific surface area of the bonding layer may be 1 g/m$^2$, 2 g/m$^2$, 3 g/m$^2$, 4 g/m$^2$, 5 g/m$^2$, or 6 g/m$^2$; optionally, the specific surface area of the bonding layer is in a range from 2.0 g/m$^2$ to 4.0 g/m$^2$, and the specific surface area of the bonding layer affects the surface tension; when the specific surface area of the bonding layer is less than 2 g/m$^2$, the surface tension is insufficient and the bonding is not strong; and when the specific surface area of the bonding layer is greater than 10

g/m$^2$, the surface tension is too large, and it is difficult to coat evenly during coating.

In a second aspect, an embodiment of the present application provides a preparation method for a separator, which is used to prepare the separator of the first aspect of the present application, and includes the following steps:

providing a base film; and
arranging a bonding layer on one side of the base film and arranging a gel film on the side of the bonding layer facing away from the base film to obtain the separator.

By arranging the bonding layer on one side of the base film and arranging the gel film on the side of the bonding layer facing away from the base film, a stable shape of the base film provides support for the bonding layer, and the bonding film bonds the base film and the gel film into a whole to obtain the separator.

In any embodiment, the step of providing the base film includes:
preparing the base film by melt extrusion and hot stretching. The base film prepared by melt extrusion and hot stretching has good shape-retaining capability.

In any embodiment, the step of arranging the bonding layer on one side of the base film and arranging the gel film on the side of the bonding layer facing away from the base film to obtain the separator includes:

preparing a bonding layer slurry and coating the bonding layer slurry on one side of the base film to obtain a bonding-layer-containing base film; and
arranging the gel film on one side of the bonding layer of the bonding-layer-containing base film facing away from the base film, and performing drying and pressing to obtain the separator.

The bonding layer slurry includes inorganic particles, a binder and a solvent. By configuring the bonding layer slurry and coating the bonding layer slurry on one side of the base film to obtain the bonding-layer-containing base film, the bonding layer slurry can be evenly dispersed on the base film to provide uniform bonding capability. By containing the inorganic particles, the binder and the solvent, the inorganic particles and the binder are dispersed in the solvent, which is convenient for coating. In some examples of the present disclosure, the solvent includes water. And/or,

a drying temperature is in a range from 30°C to 40°C, and the drying temperature may be 30°C, 31°C, 32°C, 33°C, 34°C, 35°C, 36°C, 37°C, 38°C, 39°C, or 40°C; optionally, the drying temperature is in a range from 33°C to 37°C; the drying temperature affects the bonding performance of the base film and the gel film to the bonding layer; when the drying temperature is less than/greater than 30°C, the bonding is not strong; and when the drying temperature is less than 40°C, the bonding temperature is too high, and the bonding is uneven; and/or,

a drying time is in a range from 1 s to 10 s, and the drying time may be 1 s, 2 s, 3 s, 4 s, 5 s, 6 s, 7 s, 8 s, 9 s, or 10 s; optionally, the drying time is in a range from 3 s to 7 s; the drying time affects the bonding performance of the base film and the gel film to the bonding layer; when the drying time is less than 1 s, the bonding is not tight enough; and when the drying time is greater than 10 s; and/or,

a pressing pressure is in a range from 5 N to 20 N, and the pressing pressure may be 5 N, 8 N, 10 N, 12 N, 15 N, 18 N, or 20 N; optionally, the pressing pressure is in a range from 8 N to 15 N; the pressing pressure affects the bonding performance of the base film and the gel film to the bonding layer; when the pressing pressure is less than 5 N, the bonding of the base film and the gel film to the bonding layer is not tight enough; and when the pressing pressure is greater than 20 N, the separator is compressed, thereby increasing the probability of the inorganic particles damaging the separator.

In a third aspect, an embodiment of the present application provides an electrochemical device, including the separator in the first aspect of the present application.

In any embodiment, the electrochemical device includes a capacitor, a primary battery or a secondary battery.

The technical solution of the present disclosure is further described in detail below in conjunction with specific examples. It should be understood that the following examples are only used to explain the present disclosure, and are not used to limit the present disclosure.

Parameters of the separator of Examples 1 to 28 of the present application are as shown in Table 1.

Table 1 Parameters and performance test results of separator of Examples 1 to 28

| | Parameter settings | | | | | | | Performance test results | | |
|---|---|---|---|---|---|---|---|---|---|---|
| | Material of base film | Material of gel film | Surface density of gel film | Mass proportion of inorganic particles in bonding layer | Thickness of bonding layer | Thickness of base film | Thickness of gel film | Piercing resistance (gf) | Heat shrinkage (250°C/1 h) | Battery cell cycle |
| Example 1 | Polyethylene | Polyureth ane | 11 | 20 | 6.5 | 2 | 0.5 | 370 | 1.12 | 2690 |
| Example 2 | Polypropylene | Polyureth ane | 11 | 20 | 6.5 | 2 | 0.5 | 373 | 1.15 | 2715 |
| Example 3 | Polyvinyl fluoride | Polyureth ane | 11 | 20 | 6.5 | 2 | 0.5 | 375 | 1.17 | 2700 |
| Example 4 | Polytetrafluoroeth ylene | Polyureth ane | 11 | 20 | 6.5 | 2 | 0.5 | 380 | 1.21 | 2710 |
| Example 5 | Polyethylene | Polyureth ane | 11 | 60 | 6.5 | 2 | 0.5 | 371 | 1.19 | 2680 |
| Example 6 | Polyethylene | Polyimid e | 11 | 60 | 6.5 | 2 | 0.5 | 369 | 1.13 | 2705 |
| Example 7 | Polyethylene | Polyureth ane | 6 | 40 | 2 | 4 | 6 | 550 | 1.75 | 3100 |
| Example 8 | Polyethylene | Polyureth ane | 2 | 60 | 6.5 | 2 | 0.5 | 433 | 1.31 | 2815 |
| Example 9 | Polyethylene | Polyureth ane | 10 | 60 | 6.5 | 2 | 0.5 | 452 | 1.42 | 2885 |
| Example 10 | Polyethylene | Polyureth ane | 4 | 60 | 6.5 | 2 | 0.5 | 503 | 1.53 | 2930 |
| Example 11 | Polyethylene | Polyureth ane | 8 | 60 | 6.5 | 2 | 0.5 | 510 | 1.62 | 3010 |
| Example 12 | Polyethylene | Polyureth ane | 3 | 60 | 6.5 | 2 | 0.5 | 496 | 1.49 | 2905 |
| Example 13 | Polyethylene | Polyureth ane | 1.5 | 30 | 6.5 | 2 | 0.5 | 486 | 1.37 | 2875 |
| Example 14 | Polyethylene | Polyureth ane | 1.5 | 35 | 6.5 | 2 | 0.5 | 515 | 1.45 | 2985 |
| Example 15 | Polyethylene | Polyureth ane | 1.5 | 45 | 6.5 | 2 | 0.5 | 522 | 1.59 | 3025 |
| Example 16 | Polyethylene | Polyureth ane | 1.5 | 50 | 6.5 | 2 | 0.5 | 497 | 1.44 | 2920 |
| Example 17 | Polyethylene | Polyureth ane | 1.5 | 60 | 0.5 | 13 | 0.5 | 505 | 1.32 | 2905 |
| Example 18 | Polyethylene | Polyureth ane | 1.5 | 60 | 1 | 13 | 0.5 | 525 | 1.41 | 3015 |
| Example 19 | Polyethylene | Polyureth ane | 1.5 | 60 | 3 | 13 | 0.5 | 518 | 1.54 | 2935 |
| Example 20 | Polyethylene | Polyureth ane | 1.5 | 60 | 5 | 13 | 0.5 | 499 | 1.35 | 2885 |
| Example 21 | Polyethylene | Polyureth ane | 1.5 | 60 | 0.3 | 3 | 13 | 466 | 1.44 | 2815 |
| Example 22 | Polyethylene | Polyureth ane | 1.5 | 60 | 0.3 | 6 | 13 | 503 | 1.55 | 3005 |
| Example 23 | Polyethylene | Polyureth ane | 1.5 | 60 | 0.3 | 7 | 13 | 482 | 1.43 | 2935 |

(continued)

| | Parameter settings | | | | | | | Performance test results | | |
|---|---|---|---|---|---|---|---|---|---|---|
| | Material of base film | Material of gel film | Surface density of gel film | Mass proportion of inorganic particles in bonding layer | Thickness of bonding layer | Thickness of base film | Thickness of gel film | Piercing resistance (gf) | Heat shrinkage (250°C/1 h) | Battery cell cycle |
| Example 24 | Polyethylene | Polyurethane | 1.5 | 60 | 0.3 | 12 | 13 | 459 | 1.36 | 2880 |
| Example 25 | Polyethylene | Polyurethane | 1.5 | 60 | 0.3 | 2 | 1 | 505 | 1.49 | 2890 |
| Example 26 | Polyethylene | Polyurethane | 1.5 | 60 | 0.3 | 2 | 6 | 531 | 1.66 | 3020 |
| Example 27 | Polyethylene | Polyurethane | 1.5 | 60 | 0.3 | 2 | 8 | 515 | 1.52 | 2975 |
| Example 28 | Polyethylene | Polyurethane | 1.5 | 60 | 0.3 | 2 | 12 | 511 | 1.43 | 2915 |

**Comparative Example 1**

A separator includes a bonding layer, and base films which are respectively arranged on two sides of the bonding layer.

**Comparative Example 2**

A separator includes a bonding layer, and gel films which are respectively arranged on two sides of the bonding layer.

The separators of Examples 1-28 and Comparative Examples 1-2 are tested as follows:

Damage resistance test

1) Sample preparation: a sample with a diameter of greater than 65 mm is cut and laid flat on a testing machine; and
2) test

a piercing fixture is installed on a tensile machine with a needle diameter of 1 mm, a test button is clicked until the separator is pierced, and a displayer of the tensile testing machine displays a test value.

Heat shrinkage rate test

(1) Sample preparation: a punching machine is used to punch a sample with a width of 50 mm and a length of 100 mm, 5-10 parallel samples are 5-10 placed in a glass plate, and four sides are fixed with paper clips; and
2) test

a temperature of a blast oven is set to 250°C; after the temperature reaches the set temperature and become stable for 60 min, the glass plate is placed in the oven for 1 h, a length and width of the separator is measured, and numerical values are denoted as a,b respectively.

3) Calculation:

$$\text{Shrinkage rate A in a Length direction} = (100\text{-}a)/100*100\%;$$

$$\text{Shrinkage rate B in a width direction} = (50\text{-}b)/50*100\%;$$

the values of A and B are recorded respectively.

Cycle performance test of secondary battery at room temperature

The secondary batteries prepared in Examples 1-28 and Comparative Examples 1-2 are charged and discharged for the first time at 25°C, and the process is as follows: at 25°C, the secondary batteries are allowed to stand for 30 min, then charged to 4.35 V at a constant current of 1 C, and then continue to be charged at a constant voltage until the current is less than or equal to 0.05 C; then the secondary batteries are discharged to 2.8 V at a constant current of 1 C, and a discharge capacity C1 of the first cycle is recorded.

Subsequently, the batteries are continuously charged and discharged in a cycle at 0.33C1/1C1 with a voltage range of 3.3 V to 4.3 V, and the discharge capacity during the cycle is recorded. The capacity retention rate of the Nth cycle= (discharge capacity of the Nth cycle/discharge capacity of the first cycle)x100%. The capacity retention rate of the secondary battery after 1000 cycles at 25°C is tested.

The performance test results of Examples 1-28 are shown in Table 1, and the performance test results of Comparative Examples 1 and 2 are shown in Table 2.

Table 2 Performance test results of Comparative Examples 1 and 2

|  | Performance test results | | |
|---|---|---|---|
|  | Piercing resistance (gf) | Heat shrinkage (250°C/1h) | Battery cell cycle |
| Comparative Example 1 | 305 | 1.03 | 2580 |
| Comparative Example 2 | 323 | 0.89 | 2615 |

It can be seen from the data in Table 1 and Table 2 that the base film and the gel film are respectively arranged on the two sides of the bonding layer, such that the gel film and the base film are bonded into a whole under a bonding action of the bonding layer, and thus when there is an external force acting in a vertical direction of the separator, the separator deforms but is not prone to breaking, thereby delaying breakage of the separator and improving stability and safety of the battery. Therefore, the piercing resistance, heat shrinkage resistance and the battery cell cycle performance of the separator in Examples 1-28 are better than those in the Comparative Examples 1 and 2.

It can be seen from Examples 8-12 that the surface density of the gel film affects the piercing resistance and the ion transmission capability of the separator; when the surface density of the gel film is less than 2 $g/m^2$, the piercing resistance of the separator decreases; and when the surface density of the gel film is greater than 10 $g/m^2$, the ion transmission capability is reduced, and then the cycle performance of the battery cell is affected.

It can be seen from Examples 12-17 that the mass proportion of the inorganic particles in the bonding layer affects ion transmission capability and the heat resistance of the separator; when the mass proportion of the inorganic particles in the bonding layer is less than 30%, the bonding layer is too thin, and the heat resistance is reduced, thereby affecting cycle performance of the battery cell; and when the mass proportion of the inorganic particles in the bonding layer is greater than 50%, the ion transmission capability is reduced, thereby affecting the cycle performance of the battery cell.

It can be seen from Examples 16-21 that the thickness of the bonding layer affects the energy density of the battery cell and thus affects the service life of the battery cell, and further affects the heat resistance of the separator; when the thickness of the bonding layer is less than 0.5 $\mu$m, the heat resistance of the separator is reduced; and when the thickness of the bonding layer is greater than 6 $\mu$m, the energy density of the battery cell is reduced, and the service life of the battery cell is affected.

It can be seen from Examples 20-25 that the thickness of the base film affects the energy density of the battery cell and the shape-retaining performance of the separator; when the thickness of the base film is less than 3 $\mu$m, the base film is too thin, the thickness of the separator is too thin, and a shape-retaining capability of the separator is reduced; and when the thickness of the base film is greater than 12 $\mu$m, the base film is too thick, the energy density of the battery cell is reduced, and thus the service life of the battery cell is reduced.

It can be seen from Examples 24-28 that the thickness of the gel film affects the energy density of the battery cell and piercing resistance of the separator; when the thickness of the gel film is less than 1 $\mu$m, the gel film is too thin, the thickness of the separator is too thin, and the piercing resistance of the separator is reduced; and when the thickness of the gel film is greater than 12 $\mu$m, the gel film is too thick, the energy density of the battery cell is reduced, and thus the service life of the battery cell is reduced.

To sum up, in the separator provided in the present application, the gel film has the relatively good ductility and deformation resistance, is not prone to be being pierced or still completely covers the pierced position after being pierced, such that the separator still plays a role in separating the positive and negative electrodes; and the base film has the relatively good shape-retaining capability and self-supporting performance. The base film and the gel film are respectively provided on the two sides of the bonding layer, such that the gel film and the base film are bonded into a whole under the bonding action of the bonding layer, and thus when there is an external force acting in the vertical direction of the separator, the separator deforms but is not prone to breaking, thereby delaying the breakage of the separator and improving the stability and safety of the battery.

The above is only a preferred exeample of the present disclosure, and is not intended to limit the patent scope of the present disclosure. For those skilled in the art, the present disclosure can have various changes and variations. Any modification, equivalent replacement, improvement and the like made within the spirit and scope of the present disclosure shall all be contained in the scope of patent protection of the present disclosure.

**Claims**

1. A separator, comprising a bonding layer, and a base film and a gel film which are respectively arranged on two sides of the bonding layer.

2. The separator according to claim 1, wherein

a thickness of the bonding layer is $\delta_1$, wherein 0.5 $\mu$m$\leq\delta_1\leq$5 $\mu$m, optionally, 1 $\mu$m$\leq\delta_1\leq$3 $\mu$m; and/or,
a thickness of the base film is $\delta_2$, wherein 3 $\mu$m$\leq\delta_2\leq$12 $\mu$m, optionally, 3 $\mu$m$\leq\delta_2\leq$7 $\mu$m; and/or,
a thickness of the gel film is $\delta_3$, wherein 1 $\mu$m$\leq\delta_3\leq$12 $\mu$m, and optionally, 1 $\mu$m$\leq\delta_3\leq$8 $\mu$m.

3. The separator according to claim 1 or 2, wherein a material of the base film comprises at least one of polyolefin, polyether, polyether ketone, polyimide, polytetrafluoroethylene, polyvinyl fluoride, polyvinylidene fluoride, polyvinylidene chloride, a polyethylene-propylene copolymer and a copolymer containing a C-F bond; and/or, a material of the gel film comprises at least one of polyurethane and polyimide.

4. The separator according to any one of claims 1 to 3, wherein the bonding layer comprises inorganic particles and a binder.

5. The separator according to claim 4, wherein the inorganic particles comprise any one of boehmite, aluminum oxide, barium sulfate, magnesium oxide, magnesium hydroxide, silicon dioxide, tin dioxide, titanium oxide, calcium oxide, zinc oxide, zirconium oxide, yttrium oxide, nickel oxide, cerium oxide, zirconium titanate, barium titanate and magnesium fluoride; and/or, the binder comprises at least one of acrylate, acrylic acid and carboxymethyl cellulose.

6. The separator according to claim 4 or 5, wherein

a mass proportion of the inorganic particles in the bonding layer is in a range from 30% to 50%; optionally, the mass proportion of the inorganic particles in the bonding layer is in a range from 35% to 45%; and/or, a mass proportion of the binder in the bonding layer is in a range from 10% to 20%; optionally, the mass proportion of the binder in the bonding layer is in a range from 13% to 18%.

7. The separator according to any one of claims 4 or 6, wherein

an average particle size of the inorganic particles is in a range from 0.1 nm to 10 nm; optionally, the average particle size of the inorganic particles is in a range from 0.2 nm to 0.8 nm; and/or, a specific surface area of the inorganic particles is in a range from 5 g/m$^2$ to 15 g/m$^2$; optionally, the specific surface area of the inorganic particles is in a range from 6 g/m$^2$ to 9 g/m$^2$.

8. The separator according to any one of claims 1 or 7, wherein

a transverse tensile strength of the separator is greater than 1000 kg/cm$^2$; and/or, a longitudinal tensile strength of the separator is greater than 1200kg/cm$^2$; and/or, air permeability of the separator is in a range from 300 s/100cc to 500 s/100cc; optionally, the air permeability of the separator is in a range from 400 s/100cc to 450 s/100cc; and/or, porosity of the separator is in a range from 25% to 65%, and optionally, the porosity of the separator is in a range from 40% to 50%; and/or, porosity of the base film is in a range from 30% to 70%, and optionally, the porosity of the base film is in a range from 50 to 60 %; and/or, porosity of the gel film is in a range from 40% to 80%, and optionally, the porosity of the gel film is in a range from 50% to 60 %.

9. The separator according to any one of claims 1 or 8, wherein

pores of the base film have a pore size ranging from 100 nm to 800 nm; optionally, the pores of the base film have the pore size ranging from 200 nm to 600 nm; and/or, pores of the gel film have a pore size ranging from 200 nm to 1000 nm; optionally, the pores of the gel film have the pore size ranging from 200 nm to 600 nm.

10. The separator according to any one of claims 1 or 9, wherein

surface density of the base film is in a range from 2 g/m$^2$ to 10 g/m$^2$; optionally, the surface density of the base film is in a range from 4 g/m$^2$ to 8 g/m$^2$; and/or, surface density of the gel film is in a range from 2 g/m$^2$ to 10 g/m$^2$; optionally, the surface density of the gel film is in a range from 4 g/m$^2$ to 8 g/m$^2$; and/or,

a specific surface area of the bonding layer is in a range from 1.0 g/m$^2$ to 6.0 g/m$^2$; optionally, the specific surface area of the bonding layer is in a range from 2.0 g/m$^2$ to 4.0 g/m$^2$.

11. A preparation method for the separator according to any one of claims 1 to 10, comprising the following steps:

providing a base film; and
arranging a bonding layer on one side of the base film and arranging a gel film on the side of the bonding layer facing away from the base film to obtain the separator.

12. The preparation method for the separator according to claim 11, wherein
the step of providing the base film comprises:
preparing the base film by melt extrusion and hot stretching.

13. The preparation method for the separator according to claim 11 or 12, wherein the step of arranging the bonding layer on one side of the base film and arranging the gel film on the side of the bonding layer facing away from the base film to obtain the separator comprises:

preparing a bonding layer slurry and coating the bonding layer slurry on one side of the base film to obtain a bonding-layer-containing base film; and
arranging the gel film on one side of the bonding layer of the bonding-layer-containing base film facing away from the base film, and performing drying and pressing to obtain the separator;
wherein, the bonding layer slurry comprises inorganic particles, a binder and a solvent; and/or,
a drying temperature is in a range from 30°C to 40°C; optionally, the drying temperature is in a range from 33°C to 37°C; and/or,
a drying time is in a range from 1 s to 10 s; optionally, the drying time is in a range from 3 s to 7 s; and/or,
a pressing pressure is in a range from 5 N to 20 N; optionally, the pressing pressure is in a range from 8 N to 15 N.

14. An electrochemical device, comprising the separator according to any one of claims 1 to 10.

15. The electrochemical device according to claim 14, comprising a capacitor, a primary battery or a secondary battery.

## INTERNATIONAL SEARCH REPORT

| International application No. |
|---|
| **PCT/CN2023/140738** |

**A. CLASSIFICATION OF SUBJECT MATTER**

H01M50/457(2021.01)i; H01M50/409(2021.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS: CNTXT; VEN; USTXT; EPTXT; WOTXT; CNKI: 电池, 隔膜, 凝胶, 层, 涂覆, 刺穿, battery, membrane, gel, layer, coat, pierce

**C. DOCUMENTS CONSIDERED TO BE RELEVANT**

| Category* | Citation of document, with indication, where appropriate, of the relevant passages | Relevant to claim No. |
|---|---|---|
| X | CN 109546063 A (XUCHANG UNIVERSITY) 29 March 2019 (2019-03-29) description, paragraphs 4-60, and figure 1 | 1-15 |
| X | CN 114335904 A (CYG CHINALY NEW MATERIAL CO., LTD.) 12 April 2022 (2022-04-12) description, paragraphs 5-59, and figures 1-2 | 1-15 |
| X | WO 2017008286 A1 (ROBERT BOSCH GMBH) 19 January 2017 (2017-01-19) description, page 2, paragraph 5-page 10, paragraph 2, and figure 1 | 1-15 |
| A | EP 2111915 A1 (TONEN CHEMICAL CORP.) 28 October 2009 (2009-10-28) entire document | 1-15 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 March 2024** | **12 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/140738**

| Patent document cited in search report | | | Publication date (day/month/year) | Patent family member(s) | | | Publication date (day/month/year) |
|---|---|---|---|---|---|---|---|
| CN | 109546063 | A | 29 March 2019 | CN | 109546063 | B | 22 June 2021 |
| CN | 114335904 | A | 12 April 2022 | CN | 114335904 | B | 12 July 2022 |
| WO | 2017008286 | A1 | 19 January 2017 | CN | 107836049 | A | 23 March 2018 |
| | | | | KR | 20180030533 | A | 23 March 2018 |
| | | | | EP | 3324461 | A1 | 23 May 2018 |
| | | | | JP | 2018520492 | A | 26 July 2018 |
| | | | | US | 2018212271 | A1 | 26 July 2018 |
| | | | | JP | 6602948 | B2 | 06 November 2019 |
| EP | 2111915 | A1 | 28 October 2009 | | None | | |

Form PCT/ISA/210 (patent family annex) (July 2022)

**EP 4 668 458 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310609508